Europäisches Patentamt

(19) **European Patent Office**

Office européen des brevets

(11) Veröffentlichungsnummer: **0 030 336**
**B1**

# (12) EUROPÄISCHE PATENTSCHRIFT

(45) Veröffentlichungstag der Patentschrift:
02.02.83

(51) Int. Cl.³: **F 16 K  3/26**, G 05 D  16/10

(21) Anmeldenummer: **80107441.0**

(22) Anmeldetag: **28.11.80**

(54) **Druckmittelventil, insbesondere Druckreduzierventil.**

(30) Priorität: **07.12.79  DE 2949231**

(43) Veröffentlichungstag der Anmeldung:
**17.06.81 Patentblatt 81/24**

(45) Bekanntmachung des Hinweises auf die Patenterteilung:
**02.02.83 Patentblatt 83/5**

(84) Benannte Vertragsstaaten:
**CH GB IT LI**

(56) Entgegenhaltungen:
**DE-A-2 535 035**
**GB-B-1 254 906**

(73) Patentinhaber: **Mannesmann Rexroth GmbH,**
**Postfach 340 Jahnstrasse 3 - 5, D-8770 Lohr/Main (DE)**

(72) Erfinder: **Machat, Götz Dieter, Rexrothstrasse 12,**
**D-8770 Lohr/Main (DE)**

(74) Vertreter: **Fink, Heinrich, Dipl.-Ing.,**
**Postfach 527 Hindenburgstrasse 44, D-7300 Esslingen**
**(Neckar) (DE)**

Druckmittelventil, insbesondere Druckreduzierventil

Die Erfindung bezieht sich auf ein Druckmittelventil entsprechend dem Oberbegriff des Anspruches 1.

Bei einem bekannten Druckreduzierventil der vorgenannten Art hat der Kolbenbund den gleichen Aussendurchmesser wie die Kolben und befindet sich in Ruhelage des Kolbenschiebers im Bereich des Zuflusses auf der Hochdruckseite und in Schliesslage in Höhe eines zwischen dem Zufluss und dem Abfluss angeordneten, nach innen ragenden Gehäusebundes, dessen Öffnung er verschliesst. Die dem Ringbund jeweils zugewandten Seiten der Kolben sind lotrecht zur Längsachse des Kolbenschiebers angeordnet. Der Kolbenbund dient hier zum Ändern des Querschnittes einer von ihm ganz verschliessbaren Verbindungsbohrung im Ventilgehäuse (Zoebl, „Ölhydraulik", Wien, Springer-Verlag 1963, S. 158).

Der vorliegenden Erfindung liegt die Aufgabe zugrunde, die vom strömenden Druckmittel auf den Schieber ausgeübte Axialkraft durch Erzeugen einer vom strömenden Druckmittel verursachten Gegenkraft zu verringern. Diese Aufgabe wird durch die Merkmale im Kennzeichnungsteil des Anspruches 1 erfindungsgemäss gelöst. Der Kolbenbund dient nicht zum Ändern des Querschnittes einer Verbindungsbohrung, sondern zum Erzeugen einer auf den Kolbenschieber zusätzlich wirkenden Kraft als Gegenkraft zu der vom strömenden Druckmittel auf mindestens einen der Kolben des Kolbenschiebers ausgeübten Kraft, indem das zwischen den Kolben fliessende Druckmittel durch den Kolbenbund umgelenkt wird. In allen Steuerlagen des Kolbenschiebers, in denen Druckmittel durch das Druckmittelventil hindurchfliesst, tritt eine gleichbleibende Drosselung des Druckmittels im Bereich des Kolbenbundes auf, wobei die vom Kolben selbst erzeugte, auf einem änderbaren Drosselquerschnitt beruhende Drosselung des Druckmittelstromes erhalten bleibt. Anzustreben ist ein Ausgleich zwischen der vom strömenden Druckmittel ausgeübten Axialkraft und der vom strömenden Druckmittel erzeugten Gegenkraft.

Weitere Vorteile ergeben sich aus dem übrigen Anspruch, der Beschreibung und der Zeichnung. In dieser sind zwei Druckreduzierventile als Ausführungsbeispiele des Gegenstandes der Erfindung schematisch dargestellt. Es zeigen:

Fig. 1 und 2 je einen Längsschnitt durch eines der Ausführungsbeispiele,

Fig. 3 und 4 je einen Ausschnitt aus Fig. 1 bzw. 2 in grösserem Massstabe und mit geänderter Lage eines Teiles, und

Fig. 5 und 6 je einen Einzelteil eines der Ausführungsbeispiele.

Beim ersten Ausführungsbeispiel ist in eine Sackbohrung in einem Gehäuse 1 eine Büchse 2 eingesetzt, die in axialem Abstand je einen Kranz von Bohrungen 3 bzw. 4 aufweist. Die Bohrungen 3, 4 sind jeweils von einem im Gehäuse 1 vorgesehenen Ringkanal 5 bzw. 6 umgeben. Der Ringkanal 5 ist mit zwei koaxial angeordneten Einlassbohrungen 7 bzw. 8 verbunden, die an eine nicht dargestellte Druckmittelquelle hochdruckseitig angeschlossen sind. Der Ringkanal 6 ist über einen nicht dargestellten Kanal mit einer Auslassbohrung 9 (Niederdruckseite) verbunden, die koaxial zur Büchse 2 angeordnet, aber durch einen Gehäusewandteil von dieser räumlich getrennt ist.

Die die Büchse 2 aufnehmende Axialbohrung im Gehäuse 1 überragt geringfügig den Ringkanal 5 auf der vom Ringkanal 6 abgewandten Seite. Zwischen den beiden Ringkanälen 5 und 6 ist der zwischen dem Gehäuse 1 und der Büchse vorhandene Spalt durch eine Dichtung 10 abgedichtet. Auf der vom Ringkanal 5 abgewandten Seite des Ringkanals befindet sich eine der Dichtung 10 entsprechende Dichtung 11 ebenfalls zur Abdichtung des Spaltes zwischen dem Gehäuse 1 und der Büchse 2. Diese hat auf ihrem vom Ringkanal 5 abgewandten Ende einen nach aussen ragenden Flansch 12, mit dem sich die Büchse 2 in einem erweiterten Teil der Axialbohrung des Gehäuses 1 befindet. Zwischen einer auf der vom Ringkanal 5 abgewandten Seite in das Gehäuse 1 eingeschraubten Schraubbüchse 13 und der Stirnseite der Büchse 2 ist ein eine Axialbohrung aufweisender Ventilkörper 14 eingespannt, mit dem ein diese Axialbohrung überwachender Ventilteil 15 zusammenwirkt, den eine zwischen diesem Ventilteil 15 und einer Schraubhülse 16 eingespannte Feder 17 in Schliesslage zu halten sucht. Die Schraubhülse 16 ist in die Schraubbüchse 13 eingeschraubt und gegenüber dieser axial verstellbar. Zum Verstellen der Schraubhülse 16 und damit zum Ändern der Spannung der Feder 17 dient ein auf der Schraubhülse 16 befestigter Handgriff 18, und zum Feststellen der gegenseitigen Lage zwischen der Schraubbüchse 13 und der Schraubhülse 16 ist eine Kontermutter 19 vorgesehen. Der zwischen dem Gehäuse 1 und der Schraubbüchse 13 vorhandene Spalt ist mittels einer Dichtung 20 abgedichtet und der Spalt zwischen der Schraubbüchse 13 und der Schraubhülse 16 durch eine Dichtung 21. Im Bereich des in Schliesslage befindlichen Ventilteiles 15 ist in der Schraubbüchse 13 eine Radialbohrung 21b vorgesehen, die mit einem im Gehäuse 1 vorgesehenen Radialkanal 22 ständig in Verbindung steht, der seinerseits an einen nach aussen offenen Steuerkanal 23 angeschlossen ist. Eine parallel zur Axialbohrung im Gehäuse 1 angeordnete Bohrung 24, die den Steuerkanal 23 und den Ringkanal 6 trifft, ist auf seiten des Radialkanals 22 durch einen Stopfen 25 nach aussen abgeschlossen. Der Ringkanal 6 und der Steuerkanal 23 sind durch einen Stopfen 26 voneinander getrennt. Zwischen dem Flansch 12, der Büchse 2 und der Dichtung 11 ist eine durch einen Stopfen 27 geschlossene Bohrung an die Aussenseite der Büchse 2 herangeführt.

In der in Achsrichtung verlaufenden Ventilbohrung der Büchse 2 ist ein Kolbenschieber 28 axial verschiebbar gelagert. Der Kolbenschieber 28 hat an seinen Enden je einen Kolben 29 und 30. Diese Kolben dienen zum endseitigen Lagern des Kolbenschiebers 28 in der Büchse 2. Die Stirnseite der in der Axialbohrung im Gehäuse 1 untergebrachten Büchse 2 ist mit einer Schneidkante versehen, die mittels der Schraubbüchse 13 an die ebene Grundfläche der Axialbohrung im Gehäuse angepresst wird und den Raum zwischen der ebenen Stirnseite des Kolbens 29 und der Gehäusewand des Ringkanals 5 abdichtet. Der Kolben 30 ist hohl ausgebildet. Zwischen dem Grund des Hohlraumes im Kolben 30 und dem Ventilkörper 14 ist eine Feder 31 eingespannt. In der Mitte zwischen den Kolben 29 und 30 ist ein radial nach aussen vorstehender Kolbenbund 32 angeordnet. Der Kolbenschieber 28 ist von einer Axialbohrung 33 durchsetzt, in die ein eine Drosselstelle aufweisender Drosselkörper 34 eingeschraubt ist. Über die Axialbohrung 33 und den Drosselkörper 34 sind die beiden voneinander abgewandten Stirnseiten der Kolben 29, 30 miteinander verbunden. Zwischen dem Kolbenbund 32 und dem Kolben 30 ist im Kolbenschieber 28 eine radiale Verbindungsbohrung 35 vorgesehen, die die Axialbohrung 33 mit dem Raum am Aussenumfang des Halses des Kolbenschiebers 28 verbindet.

Der Kolbenbund 32 ist im Querschnitt trapezförmig ausgebildet und die einander zugewandten Seiten der Kolben 29 und 30 sind kegelförmig gestaltet. Die Kegelwinkel der einander zugewandten Seiten der Kolben 29, 30 und der einander gegenüberliegenden Kegelflächen des Kolbenbundes 32 haben je einen im Bereich zwischen 40 und 70° liegenden Kegelwinkel. Die einander gegenüberliegenden Seiten der Kolben 29, 30 und der beiden Seiten des Kolbenbundes 32 können auch gewölbt ausgebildet sein, indem statt einer Geraden eine Kurve als Erzeugende des Rotationskörpers gewählt wird.

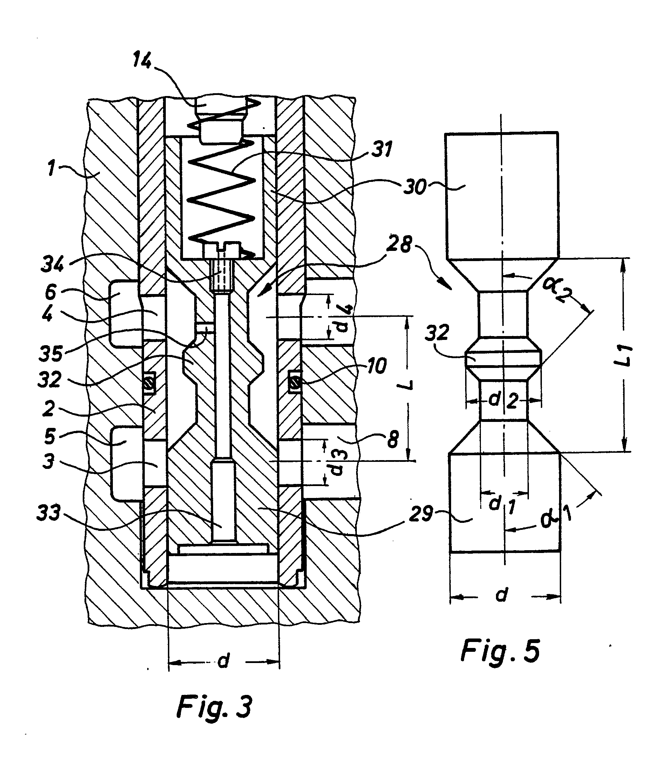

In Fig. 3 sind verschiedene Abmessungen des Kolbenschiebers 28 dargestellt. Es bezeichnen:
d　Aussendurchmesser der beiden Kolben 29 und 30,
d1　Aussendurchmesser des Verbindungsteiles (Hals) zwischen den beiden Kolben 29 und 30,
d2　Aussendurchmesser des Kolbenbundes 32,
L　Mittenabstand der Bohrungen 3 und 4,
L1　Abstand der Steuerkanten des Kolbenschiebers 28,
d3 und d4 Durchmesser der Bohrungen 3 bzw. 4,
a1　Einströmwinkel auf der Einströmseite des Kolbens 29, und
a2　Abströmwinkel am Kolbenbund 32.

Für die üblichen Nennweiten von Reduzierventilen haben sich folgende Verhältnisse in den angegebenen Bereichen als günstig erwiesen, wobei der in Klammern angegebene Wert jeweils der optimale Wert ist:

$d/d1 = 2,0 ... (2,5) ... 3,5$
$d/d2 = 1,0 ... (1,5) ... 2,0$
$d/d3 = 1,5 ... (2,7) ... 4,0$
$d/d4 = 1,5 ... (2,5) ... 4,0$
$L/d　= 1,0 ... (1,1 \text{ bis } 1,4) ... 3,0$

$L \leqslant L1 \leqslant L + (d3 + d4)/2$
$a1 \leqslant a2 = 40° ... (47°) ... 70°$.

Die Grösse des Verhältniswertes L/d (1,06 beim ersten Ausführungsbeispiel) bestimmt die Art der Zuführung des Druckmittels auf die voneinander abgewandten Stirnseiten des Kolbenschiebers 28.

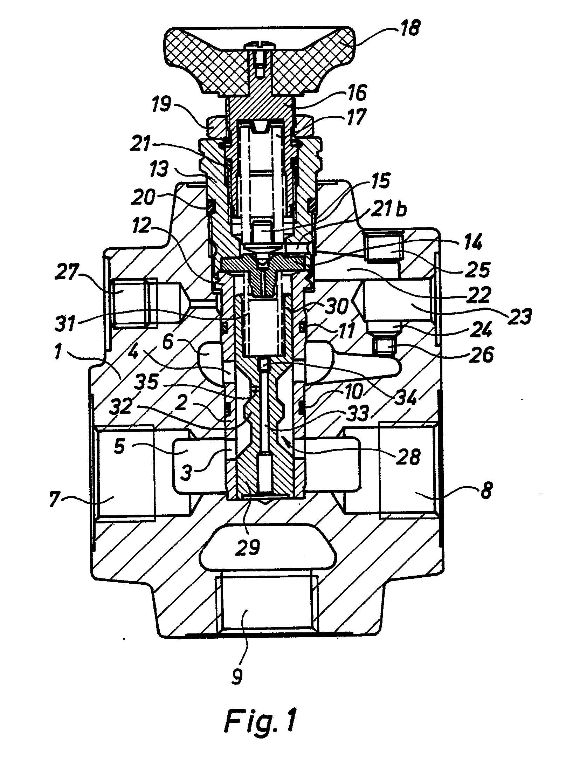

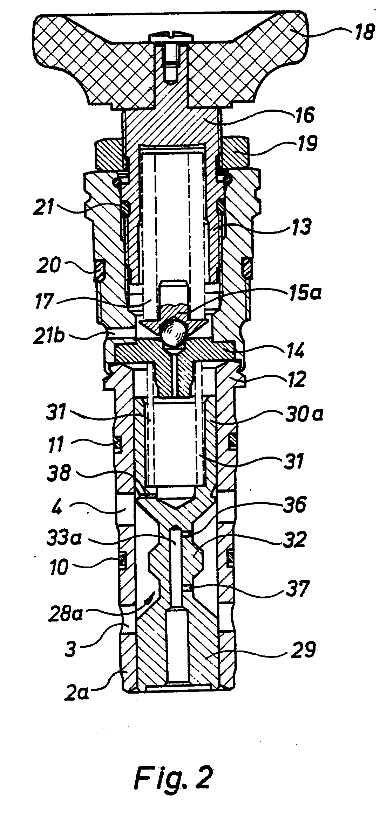

In der in Fig. 1 dargestellten Lage des Kolbenschiebers 28 ist der mit der Hochdruckseite verbundene Ringkanal 5 über die Bohrungen 3, den Zwischenraum zwischen der Büchse 2 und dem Kolbenschieber 28 über die Bohrungen 4 mit dem Ringkanal 6 verbunden (Niederdruckseite). Der im Bereich der Bohrungen 4 innerhalb der Büchse 2 vorhandene Druck wirkt sich über die Verbindungsbohrung 35 und die Axialbohrung 33 auf die Stirnseite des Kolbens 29 und über den Drosselkörper 34 auf die Stirnseite des Kolbens 30 aus. Solange der im Ringkanal 5 herrschende Druck kleiner als der Druck im Ringkanal 6 ist, bleibt der Kolbenschieber 28 in seiner in Fig. 1 dargestellten Lage. Erreicht der Druck im Ringkanal 6 den voreingestellten Öffnungsdruck des Vorsteuerventils 14, 15, fliesst Steuerdruckmittel über die Radialbohrung 21, den Radialkanal 22 und den Steuerkanal 23 zum Vorratsbehälter. Dadurch entsteht am Kolbenschieber 28 eine Druckdifferenz, die diesen veranlasst, sich in Richtung zum Ventilkörper 14 zu bewegen. Durch fortschreitendes Überdecken der Bohrungen 3 durch den Kolben 29 (Fig. 2) wird der Durchflussquerschnitt der Bohrungen 3 verringert und das hier hindurchströmende Druckmittel wird gedrosselt, wodurch der Druck in dem Ringkanal 6 annähernd gleich gehalten wird.

Beim zweiten Ausführungsbeispiel nach den Fig. 2, 4 und 6 sind gleiche Teile mit gleichen Bezugszeichen versehen, wobei jedoch den Bezugszeichen abgewandelter Teile der Buchstabe a beigefügt ist. Das zweite Ausführungsbeispiel hat eine längere Büchse 2a und die Bohrungen 3 und 4 haben einen grösseren Mittenabstand L als beim ersten Ausführungsbeispiel. Dadurch ist die Druckmittelentnahme auf den voneinander abgewandten Stirnseiten der Kolben 29 und 30 anders.

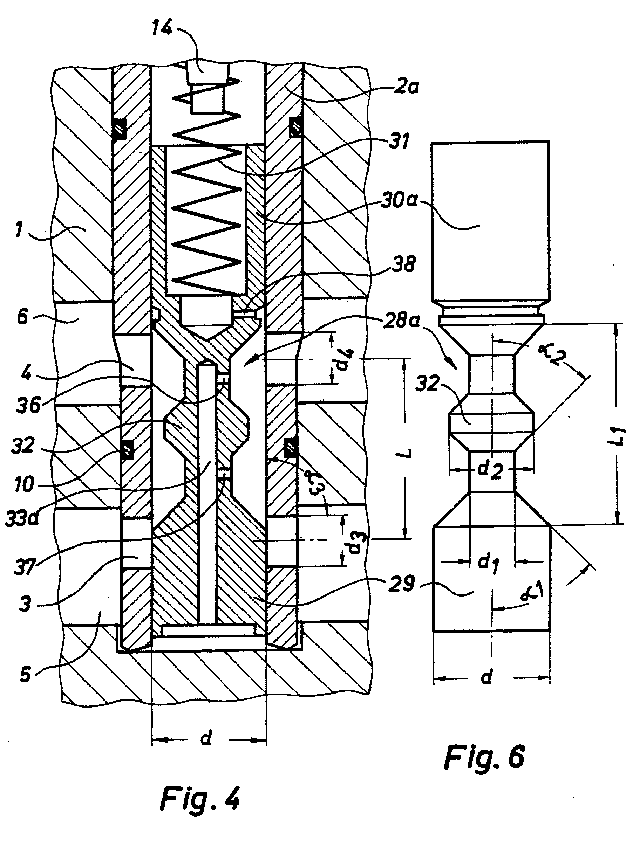

Bei dem in den Fig. 2 und 4 dargestellten Kolbenschieber 28 (Verhältniswert L/d = 1,36) ist die Axialbohrung 33a als Sackbohrung ausgeführt. Die beiden voneinander abgewandten Stirnseiten der Kolben 29 und 30 sind nicht miteinander verbunden.

Beidseitig des Kolbenbundes 32 ist in dem die Kolben 29, 30 verbindenden Verbindungsteil je eine Verbindungsbohrung 36 und 37 vorgesehen, welche die Axialbohrung 33a mit den beidseitig des Kolbenbundes angeordneten Kammern verbindet. Die Axialbohrung 33a ist mit der dem Gehäuse zugewandten Stirnseite des Kolbens 29 verbunden. Eine radiale Drosselbohrung 38 verbindet die federbelastete Stirnseite des Kolbens 30 mit dem zwischen dem Kolbenbund 32 und der Ausströmbohrung 4 gelegenen Raum. Sie mündet auf der Aussenseite des Kolbens 30a in eine dort vorgesehene Ringnut, die auf ihrer dem Kolbenbund 32 zugewandten Seite von einem bis nahe zur Büchse reichenden Rand begrenzt ist.

Bei dem in den Fig. 2 und 4 dargestellten Kolbenschieber 28a sind die voneinander abgewandten Stirnseiten der Kolben 29 und 30a nicht mehr miteinander verbunden. Die Stirnseite des Kolbens 29 wird über die beidseitig des Kolbenbundes angeordneten radialen Verbindungsbohrungen 36 durch den innerhalb der Büchse 2a und beidseitig des Kolbenbundes 32 vorhandenen Druck beaufschlagt, wogegen auf die Stirnseite des Kolbens 30a der im Bereich der Ausströmbohrungen 4 herrschende Druck über die Drosselbohrung 38 wirksam wird. Die Regelfunktion ist die gleiche wie bei dem in Fig. 1 dargestellten Kolbenschieber.

Die Innenwand der Büchse 2 ist bei beiden Ausführungsbeispielen zylindrisch ausgebildet. Sie kann jedoch im Anschluss an die Bohrungen 3 in Richtung zu den Bohrungen 4 in einem kurzen Bereich kegelförmig erweitert sein. In Fig. 4 ist ein Winkel a3 von 90° eingezeichnet. Dieser Winkel kann auch kleiner als 90° sein und je nach Bauweise nur 30° betragen. Die bevorzugten Kegelwinkel befinden sich jedoch im Bereich zwischen 90 und 60°. Je kleiner der Winkel a3 ist, desto grösser wird die vom Druckmittelstrom auf den Kolbenschieber 28 in Öffnungsrichtung ausgeübte Kraft. Der durch die Bohrungen 3 eintretende Druckmittelstrahl wird umgelenkt und strömt in den nach dem Kolbenbund 32 befindlichen Bereich in der Büchse 2. Infolge der Umlenkung an der Wand der Büchse 2 entsteht ein Drall, der in Öffnungsrichtung des Kolbenschiebers 28 wirkt.

Wenn der Winkel a3 kleiner als 90° ist, kann der Durchmesser der Büchse 2 zwischen den Bohrungen 3 und 4 grösser als der Durchmesser des Kolbens 29 und/oder 30 sein, wobei die Durchmesser der Kolben 29 und 30 unterschiedlich gewählt werden können. Es ist günstig, wenn der Kolben 30 einen grösseren Durchmesser als der Kolben 29 hat.

Bei fehlendem Kolbenbund 32 wird beim Durchströmen des Raumes zwischen der Büchse 2 und dem Kolbenschieber 28 eine Kraft auf die Kolben 29, 30 ausgeübt, die schon bei geringem Druckgefälle ab einer bestimmten Durchflussmenge in der Zeiteinheit den Kolbenschieber 28 in Richtung zum Ventilkörper 14 zu bewegen und damit die Bohrungen 3 durch den Kolben 29 zu schliessen sucht. Dieser positiven, in Schliessrichtung wirkenden Kraft wird durch die bei der Umlenkung des Strahles am Kolbenbund 32 während des Durchströmens der Büchse 2 entstehende negative (Öffnungs-) Kraft entgegengewirkt. Dadurch bleibt die Regelfunktion des Ventils auch bei sehr grossem Druckgefälle zwischen dem Eingangsdruck und dem Ausgangsdruck innerhalb des von den maximalen Durchflussquerschnitten bestimmten Mengenbereiches erhalten.

Der Kolben kann bei ähnlichen Ein- und Ausströmverhältnissen auch als Druckwaage bei Stromreglern verwendet werden.

Als Druckmittel dient vorzugsweise eine Flüssigkeit, insbesondere Hydrauliköl.

## Patentansprüche

1. Druckmittelventil, insbesondere Druckreduzierventil, mit einem hohlen Ventilteil (2), in dessen Ventilbohrung ein Kolbenschieber (28) axial verschiebbar gelagert ist, der an seinen beiden Enden je einen Kolben (29 bzw. 30) und mit Abstand dazwischen einen im Querschnitt trapezförmigen Kolbenbund (32) aufweist, wobei die Ventilbohrung mit einem Zufluss (5) und in axialem Abstand davon mit einem Abfluss (6) verbunden ist, dadurch gekennzeichnet, dass der Kolbenbund (32) einen solchen Durchmesser hat, dass zwischen der Wand der Ventilbohrung und dem Aussenumfang des Kolbenbundes (32) stets ein für den Durchfluss von Druckmittel ausreichender und unabhängig von der Lage des Kolbenschiebers (28) im Ventilteil (2) gleichbleibender Querschnitt vorhanden ist, dass der Kolbenbund (32) mindestens in seiner Mittellage ausserhalb des Zu- und Abflusses (5 bzw. 6) liegt, und dass die dem Kolbenbund (32) jeweils zugewandte Seite der Kolben (29 bzw. 30) geneigt ausgebildet ist.

2. Druckmittelventil nach Anspruch 1, gekennzeichnet durch die folgenden Verhältniswerte:
$d/d1 = 2,0$ bis $3,5$, insbesondere $2,5$
$d/d2 = 1,0$ bis $2,0$, insbesondere $1,5$
$d/d3 = 1,5$ bis $4,0$, insbesondere $2,7$
$d/d4 = 1,5$ bis $4,0$, insbesondere $2,5$
$L/d = 1,0$ bis $3,0$, insbesondere $1,1$ bis $1,4$
$L \leqslant L1 \leqslant L + (d3 + d4)/2$
$a1 \leqslant a2 \doteq 40$ bis $70°$, insbesondere $47°$
hierin bedeuten: .
d Aussendurchmesser der beiden Kolben (29 und 30),
d1 Aussendurchmesser des Verbindungsteiles zwischen den beiden Kolben (29 und 30),
d2 Aussendurchmesser des Kolbenbundes (32),
d3 Durchmesser der Einströmbohrungen (3) in der Büchse (2),
d4 Durchmesser der Ausströmbohrungen (4) in der Büchse (2),
L Mittenabstand der Ein- und Ausströmbohrungen (3 und 4),
L1 Abstand der Steuerkanten des Kolbenschiebers (28),
a1 Einströmwinkel auf der Einströmseite des Kolbens (29), und
a2 Abströmwinkel am Kolbenbund (32).

## Revendications

1. Valve, en particulier valve de réduction de pression qui comprend une partie creuse dans l'alésage de laquelle est disposé, à glissement axial, un tiroir comportant à chacune de ses deux extrémités respectivement un piston et, à une certaine distance entre ceux-ci, un collet ayant une section trapézoïdale, un certain point dudit alésage étant relié à une arrivée de fluide et un autre point, espacé axialement du premier, étant relié à une évacuation, caractérisée en ce que le collet (32) du tiroir a un diamètre tel qu'il existe toujours, entre la paroi de l'alésage de la valve et le pourtour extérieur dudit collet, une section suffisante pour la circulation du fluide sous pression et constante indépendamment de la position du tiroir (28) dans l'élément (2), en ce que ledit collet est situé, au moins dans sa position centrale, en dehors des orifices d'admission et d'évacuation (5 ou 6), et en ce que les faces du piston tournées vers le collet sont inclinées.

2. Valve selon la revendication 1, caractérisée par les valeurs relatives suivantes:

$d/d_1 = 2,0 \ldots (2,5) \ldots 3,5$
$d/d_2 = 1,0 \ldots (1,5) \ldots 2,0$
$d/d_3 = 1,5 \ldots (2,7) \ldots 4,0$
$d/d_4 = 1,5 \ldots (2,5) \ldots 4,0$
$L/d = 1,0 \ldots (1,1 \text{ à } 1,4) \ldots 3,0$
$L \leqslant L_1 \leqslant L + (d_3 + d_4)/2$
$a_1 \leqslant a_2 = 40° \ldots (47°) \ldots 70°$

où:

d    désigne le diamètre extérieur des deux pistons (29 et 30),

d1    désigne le diamètre extérieur de la partie de liaison (du col) reliant les deux pistons (29 et 30),

d2    désigne le diamètre extérieur du collet (32),

L    désigne l'espacement moyen des ouvertures (3 et 4),

L1    désigne l'espacement des bords de commande du tiroir (28),

d3 et d4 désignent le diamètre des ouvertures (3 et 4),

a1    désigne l'angle d'admission ou d'affluence à l'entrée du piston (29), et

a2    désigne l'angle d'évacuation ou d'effluence au collet (32).

## Claims

1. A pressure-medium valve, more especially a pressure-reducing valve, provided with a hollow valve part (2), in whose valve bore there is mounted, so as to be axially displaceable, a piston slide (28) which, at its two ends, has pistons (29 and 30 respectively) and therebetween, at a distance, a piston collar (32) which is trapezium-shaped in cross section, the valve bore being connected to an inlet (5) and, at an axial distance therefrom, to an outlet (6), characterized in that the diameter of the piston collar (32) is such that between the wall of the valve bore and the external circumference of the piston collar (32) there is always provided a cross-sectional area which is sufficient for the passage of pressure medium and remains constant, irrespective of the position of the piston slide (28) in the valve part (2), and in that the piston collar (32), at least in its central position, lies outside the inlet and outlet (5 and 6 respectively), and in that the side of the pistons (29 and 30 respectively) that is respectively directed towards the piston collar (32) is designed so as to be inclined.

2. A pressure-medium valve as claimed in claim 1, characterized by the following ratio values:

$d/d_1 = 2.0 \text{ to } 3.5$, more especially 2.5
$d/d_2 = 1.0 \text{ to } 2.0$, more especially 1.5
$d/d_3 = 1.5 \text{ to } 4.0$, more especially 2.7
$d/d_4 = 1.5 \text{ to } 4.0$, more especially 2.5
$L/d = 1.0 \text{ to } 3.0$, more especially 1.1 to 1.4
$L \leqslant L_1 \leqslant L + (d_3 + d_4)/2$
$a_1 \leqslant a_2 = 40 \text{ to } 70°$, more especially 47° therein:

d    is the outside diameter of the two pistons (29 and 30),

d1    is the outside diameter of the connection part between the two pistons (29 and 30),

d2    is the outside diameter of the piston collar (32),

d3    is the diameter of the inlet bores (3) in the bush (2),

d4    is the diameter of the outlet bores (4) in the bush (2),

L    is the centre-to-centre distance of the inlet and outlet bores (3 and 4),

L1    is the distance of the control edges of the piston slide (28),

a1    is the inlet angle at the inlet side of the piston (29), and

a2    is the outlet angle at the piston collar (32).

**Fig.1**

*Fig. 2*

Fig. 3

Fig. 5

**Fig. 4**

**Fig. 6**